# FASCICULE DE BREVET EUROPEEN

(11) **EP 1 593 594 B1**
(45) Date de publication et mention de la délivrance du brevet: **15.08.2007**
(21) Numéro de dépôt: 05300256.4
(22) Date de dépôt: 07.04.2005
(51) Int. Cl.: B64C 7/00

(54) **Cale de transition entre un moyen de fixation d'une aile sur un fuselage d'un aéronef et ladite aile, et aéronef comportant une telle cale**
Übergangskeil zwischen Flügel und Flügel-Rumpf Anschlussvorrichtung sowie Flugzeug mit einem derartigen Übergangskeil
Transition shim between a means for fastening a wing to a fuselage of an aircraft and the wing, and aircraft comprising such a shim

(30) Priorité: 04.05.2004 FR 0450859
(43) Date de publication de la demande: 09.11.2005
(73) Titulaire: AIRBUS France, 31060 Toulouse (FR)
(72) Inventeur: Rouyre, François, 31700, Cornebarrieu (FR)
(74) Mandataire: Schmit, Christian Norbert Marie

(56) Documents cités:
- FR-A- 2 827 029
- GB-A- 1 225 511
- US-A- 4 885 885

## Description

L'invention appartient au domaine de l'aéronautique. L'invention a pour objet un aéronef comprenant une cale destinée à faciliter le passage d'un joint depuis le moyen de fixation de l'aile sur le fuselage jusqu'à l'extrados de l'aile de manière à ce qu'un taux de compression du joint sur le moyen de fixation et sur l'extrados de l'aile soit constant. L'invention concerne un aéronef muni d'un carénage ventral fixé sur une partie basse d'un fuselage dudit aéronef. L'invention concerne plus précisément une zone de fixation entre une voilure de l'aéronef et le fuselage dudit aéronef.

Un but de l'invention est d'assurer une étanchéité entre un panneau du carénage ventral et le fuselage de l'aéronef, à l'endroit d'une zone de fixation d'une aile de la voilure sur ledit fuselage. Plus précisément, le but de l'invention est d'assurer que le joint d'étanchéité, disposé en périphérie interne d'un évidemment ménagé sur le panneau du carénage ventral de manière à laisser passer l'aile de la voilure, est soumis à un taux de compression homogène sur l'ensemble du profil de l'aile. Un autre but de l'invention est d'augmenter une durée de vie dudit joint d'étanchéité.

On connaît dans le domaine de l'aéronautique différents types de voilures, notamment des voilures munies de deux ailes disposées de part et d'autre du fuselage de l'aéronef. Par exemple, on connaît une voilure munie de deux ailes hautes, c'est-à-dire que les ailes sont posées sur le fuselage de telle façon que, vue de profil, chaque aile dans son ensemble est placée au dessus du fuselage. On connaît également une voilure munie de deux ailes médianes. Les ailes médianes s'implantent au voisinage du plan diamétral du fuselage. Enfin, on connaît une voilure à ailes basses. Dans un ce dernier cas, l'intrados de l'aile traverse le fuselage.

Par ailleurs, on connaît des aéronefs munis d'un carénage ventral. Par exemple, dans le cas d'une voilure à ailes basses, le carénage ventral est fixé à l'endroit d'une partie inférieure du fuselage, au croisement du fuselage avec la voilure. Le carénage ventral obture la partie inférieure du fuselage. Le carénage ventral, en forme de berceau, est muni d'une base et de deux rebords, ou panneaux longitudinaux remontant latéralement de part et d'autre dudit fuselage. Chaque panneau est muni d'un évidement apte à laisser passer une aile de la voilure de l'aéronef.

Il est connu, dans certains cas, de disposer un joint d'étanchéité sur un pourtour interne de chaque évidement, c'est-à-dire entre une paroi interne bordant l'évidement et l'aile traversant ledit évidement. Un tel joint d'étanchéité doit interdire une circulation d'air à l'intérieur du carénage à travers l'évidement. En effet, un tel passage d'air provoque une vibration du joint. Cette vibration peut créer un bruit audible depuis l'intérieur d'une cabine de l'aéronef, créant ainsi une gêne auditive pour des occupants de ladite cabine. Par ailleurs, cette vibration se transmet au fuselage et aux éléments qu'il comporte, ce qui provoque une sollicitation structurale et fatigue lesdits éléments. De plus, la vibration du joint favorise une usure dudit joint, l'usure pouvant entraîner une déchirure précoce du joint. Enfin, cette vibration entraîne une traînée aérodynamique parasite.

Dans certains aéronefs, le joint d'étanchéité, dans la zone de l'extrados de l'aile, transite depuis le moyen de fixation de l'aile sur le fuselage jusqu'à l'extrados et/ou l'intrados de l'aile. Or, généralement, le moyen de fixation forme une sur-épaisseur à l'endroit de l'extrados et/ou de l'intrados de l'aile. Par exemple, le moyen de fixation est une ferrure de liaison permettant de maintenir l'aile sur le fuselage. Une première partie de la ferrure est solidaire du fuselage tandis qu'une deuxième partie de la ferrure est solidaire de l'extrados de l'aile. La deuxième partie de la ferrure est fixée par tous moyens sur l'extrados de l'aile. Une épaisseur de la deuxième partie de la ferrure, solidaire de l'extrados de l'aile, forme donc une sur-épaisseur sur l'extrados l'aile, pouvant atteindre une quinzaine de millimètres. Ainsi, le joint d'étanchéité, transitant depuis le moyen de fixation jusqu'à l'extrados de l'aile, est soumis à un dénivelé. Un tel dénivelé peut entraîner une mauvaise adhérence du joint à l'endroit d'une zone de transition entre le moyen de fixation et l'extrados de l'aile, c'est-à-dire que le joint n'est pas suffisamment comprimé entre la paroi bordant l'évidement et la zone de transition entre le moyen de fixation et l'extrados de l'aile. Il s'ensuit un passage d'air depuis l'extérieur jusqu'à l'intérieur du carénage ventral.

Un but de l'invention est donc d'assurer une parfaite adhérence du joint depuis le moyen de fixation jusqu'à l'extrados et/ou l'intrados de l'aile, afin de permettre une étanchéité parfaite entre l'extérieur et l'intérieur du carénage ventral. Pour cela, l'invention propose une cale de transition entre le moyen de fixation de l'aile sur le fuselage de l'aéronef et ladite aile. La cale est disposée sur l'aile, à l'endroit de la zone de transition entre les deux surfaces, de manière à restituer un profil aérodynamique de l'aile. La cale a donc une épaisseur qui tend à décroître depuis une épaisseur sensiblement égale à l'épaisseur du moyen de fixation jusqu'à une épaisseur quasiment nulle correspondant au niveau de l'extrados ou de l'intrados de l'aile. Ainsi le joint est accompagné de manière progressive depuis le moyen de fixation jusqu'à l'aile, de manière à pouvoir être soumis à un taux de compression constant. Avantageusement, cette cale de transition est réalisée dans un matériau plastique expansé. Un tel matériau a une masse peu élevée, ce qui permet de ne pas augmenter de manière trop importante un poids total de l'aéronef. Par ailleurs, l'emploi d'un tel matériau simplifie la fixation de la cale sur l'aile.

L'invention a donc pour objet un aéronef selon la revendication 1.

Dans des exemples de réalisation particuliers de l'aéronef, la cale peut comporter tout ou parties des caractéristiques supplémentaires suivantes :
- elle est apte à être disposée sur l'extrados de l'aile ;
- elle est apte à être disposée sur l'intrados de l'aile ;
- elle est en matériau plastique expansé ;
- elle est collée sur l'aile ;
- elle est munie d'arêtes arrondies ;
- une surface externe de la cale est recouverte d'un apprêt, par exemple du mastic ;
- un contour externe de la cale suit un contour externe du moyen de fixation à l'endroit d'une zone de contact entre ladite cale et ledit moyen de fixation ;

- la cale a une pente telle qu'un taux de compression du joint entre le moyen de fixation et la paroi interne de l'évidement, d'une part, et entre l'extrados de l'aile et la paroi interne de l'évidement, d'autre part, est homogène.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Un aéronef muni d'un carénage ventral;
- Figure 2 : Une représentation d'une aile de l'aéronef, à l'endroit d'une zone de transition entre un moyen de fixation de l'aile sur un fuselage de l'aéronef et ladite aile ;
- Figure 3 : L'aile de la figure 2 munie d'une cale de transition ;
- Figure 4 : Un agrandissement de la cale de la figure 3.

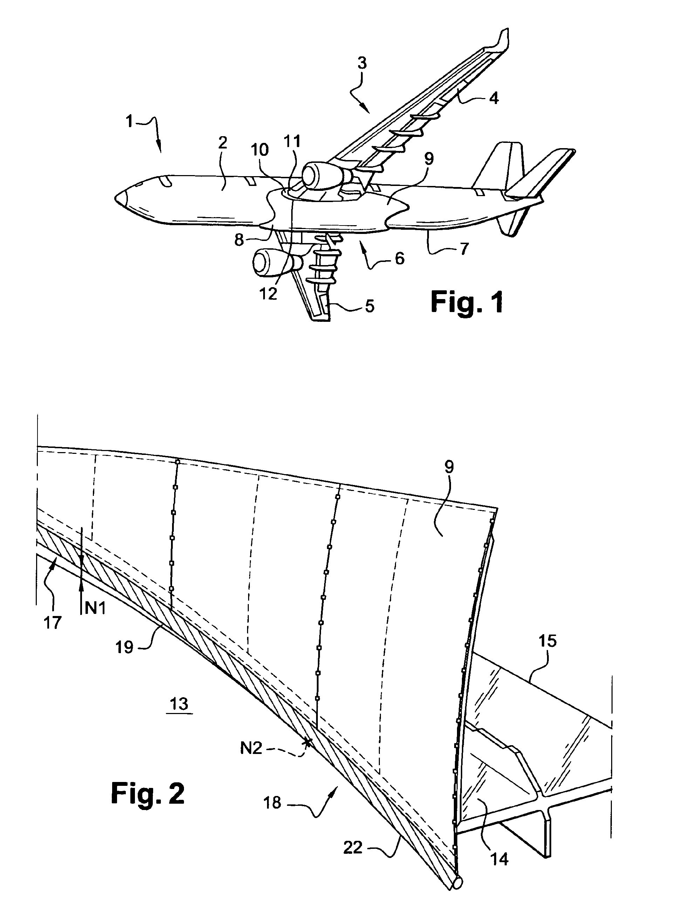

Sur la figure 1, on peut voir un aéronef 1 muni d'un fuselage 2 et d'une voilure 3. La voilure 3 est munie de deux demi-voilures, ou ailes 4 et 5, disposées de part et d'autre du fuselage 2. L'aéronef 1 comporte également un carénage ventral 6 fixé sur une partie basse 7 du fuselage 2. Le carénage ventral 6 est muni d'une base 8 et de deux panneaux latéraux 9 (un seul panneau étant visible sur la figure 1). Les panneaux 9 s'étendent radialement par rapport à la base 8 et remontent latéralement le long du fuselage 2, de part et d'autre dudit fuselage 2. Chaque panneau 9 est muni d'un évidement 10 apte à laisser passer une aile 4 ou 5. L'évidement 10 se situe à l'endroit d'une zone de fixation 11 de l'aile 4 ou 5 sur le fuselage 2 de l'aéronef 1. Un joint (non visible sur la figure 1), tel qu'un joint à lèvre, est disposé à la périphérie interne 12 de chaque évidement 10, entre une paroi interne de l'évidement 10 et l'aile 4 ou 5.

Sur la figure 2, on peut voir plus en détail la zone de fixation 11 de l'aile 4 de l'aéronef 1 sur le fuselage 2. Plus précisément, la figure 2 montre l'extrados 13 de l'aile 4 et un moyen de fixation 15 de l'aile 4 sur le fuselage 2. Le moyen de fixation 15 est par exemple une ferrure 15 formée de deux parties, respectivement fixées au fuselage 2 (figure 1) et à l'extrados 13 de l'aile 4. Une partie 14 de la ferrure 15, solidaire de l'extrados 13 de l'aile 4, a une épaisseur telle qu'elle forme une sur-épaisseur sur l'extrados 13 de l'aile 4.

Sur la figure 2, on peut également voir la disposition du joint 22 d'étanchéité . Le joint 22 est amené à transiter depuis une première zone 17 située sur la partie 14 du moyen de fixation 15, jusqu'à une seconde zone 18 située sur l'extrados 13. Une position du joint 22 doit passer d'un niveau N1, à l'endroit du moyen de fixation 15, pouvant avoir une épaisseur allant jusqu'à une quinzaine de millimètres, jusqu'à un niveau N2 équivalant à un niveau zéro, à l'endroit de l'extrados 13 de l'aile 4. Le joint 22 risque donc de bailler à l'endroit d'une zone de transition 19 entre le moyen de fixation 15 et l'extrados 13 de l'aile 4. En effet, la partie du joint 22 située dans la zone de transition 19 n'est pas accompagnée dans cette transition entre le niveau N1 et le niveau N2. Il existe donc un risque de mauvaise installation du joint dans la zone de transition 19.

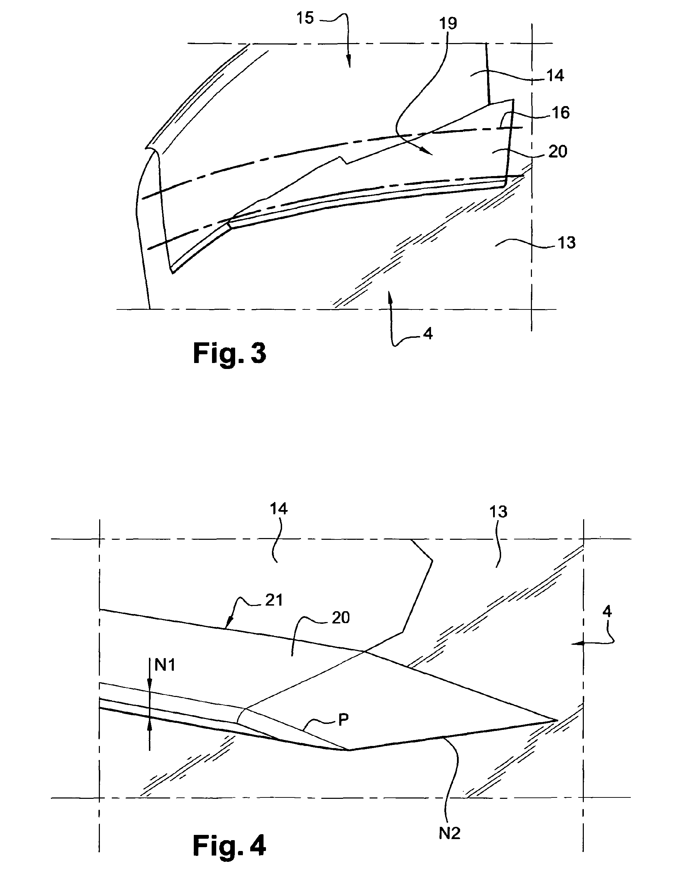

Sur la figure 3, on peut voir un exemple de réalisation d'une cale 20 de transition située dans la zone 19 de transition entre la partie 14 du moyen de fixation 15 et l'extrados 13 de l'aile 4, selon un exemple de réalisation de l'invention, ainsi que la disposition 16 du joint. Une position de la cale 20 est telle que le joint transite depuis la partie 14 du moyen de fixation 15 jusqu'à l'extrados 13 de l'aile 4 en passant par la cale 20.

Sur la figure 4, est représenté un agrandissement de la cale 20. On peut voir que la cale 20 a un profil permettant de restituer un profil aérodynamique de l'aile 4, c'est-à-dire que la cale 20 permet une transition continue entre le niveau N1 de la partie 14 du moyen de fixation 15 et le niveau N2 de l'extrados 13 de l'aile 4. Une pente P de la cale 20 est telle que le joint, lorsqu'il est comprimé entre la cale 20 et la paroi interne de l'évidement 10 (figure1), est soumis à un taux de compression constant, c'est-à-dire qu'à aucun endroit le joint baille. La cale 20 est munie d'une épaisseur, à l'endroit d'un contact avec la partie 14 du moyen de fixation 15, égale au niveau N1 de la partie 14 de moyen de fixation 15. Puis l'épaisseur de la cale 20 décroît, pour atteindre une épaisseur nulle.

La cale 20 peut avoir un contour externe qui suit au moins partiellement un contour externe de la partie 14 du moyen de fixation 15, à l'endroit d'une zone de contact 21 entre la cale 20 et la partie 14 du moyen de fixation 15. Ainsi, la cale 20 peut s'emboîter par exemple dans un relief de la partie 14 du moyen de fixation 15. D'une manière générale, une telle complémentarité entre les deux structures 14 et 20 dans la zone de contact 21 permet d'optimiser le passage continu du joint depuis le moyen de fixation 15 jusqu'à l'extrados 13 de l'aile 4, et de diminuer ainsi les risques que le joint baille ponctuellement.

Dans un exemple particulier de réalisation de l'invention, on utilise pour réaliser la cale 20 un matériau plastique expansé. Par exemple, on peut utiliser de la mousse expansée à partir de Plexiglas. L'utilisation d'un tel matériau permet de réaliser une cale 20 de masse faible. Une masse faible permet de faciliter le montage de la cale 20 sur l'extrados 13 de l'aile 4. La cale 20 peut être facilement positionnée par une seule personne. La cale 20 peut également être déplacée, selon les besoins, afin d'être positionnée au mieux sur l'aile 4 par rapport au joint. Par ailleurs, lorsque la cale 20 est réalisée en matériau plastique expansé, il est possible de fixer ladite cale 20 sur l'extrados 13 de l'aile 4 par simple collage. Une telle cale 20 peut être aisément décollée puis recollée, sans risque d'endommager l'aile 4 ou la cale 20 elle même. Par ailleurs, un tel matériau étant facilement modelable, il est possible de retailler sur place, et à volonté, la cale 20, de manière à l'ajuster parfaitement au contour externe de la partie 14 du moyen de fixation 15.

Dans un exemple particulier de réalisation de l'invention, il est possible de réaliser une cale 20 munie d'arêtes arrondies. Par exemple, une fois la cale 20 réalisée, on retaille les arêtes de ladite cale 20, de manière à former des arrondis. Une telle solution permet de diminuer les risques de coupure ou d'usure du joint, notamment par frottement du joint sur les arêtes de la cale 20.

On peut également prévoir de recouvrir la cale 20, aux arêtes arrondies ou non, d'un mastic et, ou d'une peinture. On supprime ainsi les aspérités éventuelles présentes sur la cale 20, qui a alors une surface totalement lisse. On diminue là encore les risques d'endommagement du joint.

Il est possible de munir chaque aile 4, 5 de l'aéronef 1 d'une telle cale 20, ou seulement l'une des deux ailes 4 ou 5, selon les besoins.

## Revendications

1. Aéronef (1) comportant
- un fuselage (2),
- une voilure, comportant deux ailes (4, 5) fixées de part et d'autre du fuselage, chaque aile étant maintenue sur le fuselage par l'intermédiaire d'un moyen de fixation (15) formant une sur-épaisseur à l'extrados et/ou
- un carénage ventral (6) fixé en partie basse (7) du fuselage, le carénage ventral comportant une base (8) et deux panneaux (9) s'étendant radialement par rapport à la base et remontant latéralement le long du fuselage, chaque panneau étant muni d'un évidement (10) apte à laisser passer une aile (4, 5),
- un joint (22) fixé à la périphérie de chaque évidement, ledit joint étant soumis à un dénivelé en passant par une zone de transition (19) entre le moyen de fixation et l'aile,
**caractérisé en ce qu**'il comporte, sur au moins une aile (4, 5), une cale de transition (20) disposée dans la zone de transition (19) entre le moyen de fixation et l'aile, une épaisseur de la cale étant décroissante de manière à décroître depuis le bord du moyen de fixation jusqu'à l'aile, afin qu'une pente (P) de la cale soit apte à restituer un profil aérodynamique de l'aile à l'endroit de la zone de transition.

2. Aéronef selon la revendication 1, **caractérisé en ce que** la cale est apte à être disposée sur l'extrados (13) d'une aile (4, 5).

3. Aéronef selon l'une des revendications 1 à 2, **caractérisé en ce que** la cale est apte à être disposée sur l'intrados d'une aile (4, 5).

4. Aéronef selon l'une des revendications 1 à 3, **caractérisé en ce que** la cale est en matériau plastique expansé.

5. Aéronef selon l'une des revendications 1 à 4, **caractérisé en ce que** la cale est apte à être collée sur l'aile

6. Aéronef selon l'une des revendications 1 à 5, **caractérisé en ce que** la cale est munie d'arêtes arrondies.

7. Aéronef selon l'une des revendications 1 à 6, **caractérisé en ce qu**'une surface externe de la cale est recouverte de mastic.

8. Aéronef selon l'une des revendications 1 à 7, **caractérisé en ce qu**'un contour externe de la cale est apte à suivre un contour externe du moyen de fixation à l'endroit d'une zone de contact (21) entre ladite cale et ledit moyen de fixation.

9. Aéronef selon l'une des revendications 1 à 8, **caractérisé en ce que** la pente de la cale est telle qu'un taux de compression du joint entre le moyen de fixation et la paroi interne de l'évidement d'une part et entre l'aile et la paroi interne de l'évidement d'autre part est homogène.

## Claims

1. - An aircraft (1) comprising
- a fuselage (2)
- an airfoil, comprising two wings (4, 5) fixed to both sides of the fuselage, each wing being held to the fuselage by a fastening means (15), forming a reinforcement at the upper surface and/or the lower surface of the wing,
- a ventral fairing (6) fixed to the lower part (7) of the fuselage, the ventral fairing comprising a base (8) and two panels (9) stretching radially with relation to the base and rising laterally along the fuselage, each panel being fitted with a recess (10) through which a wing (4, 5) can be passed.
- a joint (22) fixed to the rim of each recess, said joint being subject to a difference in height while passing via a transition zone (19) between the fastening means and the wing,
**characterised in that** it comprises, on at least one wing (4, 5) a transition shim (20) positioned in the transition zone (19) between the fastening means and the wing, a thickness of the shim being decreasing in such a way as to decrease from the edge of the fastening means until the wing, so that an incline (P) of the shim is apt for reproducing an aerodynamic profile of the wing at the location of the transition zone.

2. - An aircraft according to claim 1, **characterised in that** the shim is apt to be positioned on the upper surface (13) of a wing (4, 5).

3. - An aircraft according to one of claims 1 to 2, **characterised in that** the shim is apt to be positioned on the lower surface of a wing (4, 5)

4. - An aircraft according to one of claims 1 to 3, **characterised in that** the shim is made of expanded plastic material.

5. - An aircraft according to one of claims 1 to 4, **characterised in that** the shim is apt to be adhered to the wing.

6. - An aircraft according to one of claims 1 to 5, **characterised in that** the shim is fitted with rounded ridges.

7. - An aircraft according to one of claims 1 to 6, **characterised in that** one external surface of the shim is coated in sealant.

8. - An aircraft according to one of claims 1 to 7, **characterised in that** an external contour of the shim is apt to follow an external contour of the fastening means at the place of a contact zone (21) between said shim and said fastening means.

9. - An aircraft according to one of claims 1 to 8, **characterised in that** the incline of the shim is such that a compression rate of the joint between the fastening means and the internal wall of the recess on one side and between the wing and the internal wall of the recess on the other side is uniform.

## Patentansprüche

1. Flugzeug (1), bestehend aus
- einem Flugzeugrumpf (2),
- einem Tragwerk, mit zwei Flügeln (4, 5), die beiderseits des Flugzeugrumpfes befestigt sind, wobei jeder Flügel durch eine Flügel-Rumpf Anschlussvorrichtung (15) am Flugzeugrumpf festgehalten wird, die eine Verdickung an der Flügelunterseite und/ oder an der Saugseite des Flügels bildet,
- einer Bauchverkleidung (6), die am unteren Abschnitt (7) des Flugzeugrumpfes befestigt ist, wobei die Bauchverkleidung einen Unterteil (8) und zwei Platten (9) enthält, die radial im Verhältnis zum unteren Abschnitt verlaufen, und seitlich entlang des Flugzeugrumpfes nach oben führen, wobei jede Platte eine Aussparung (10) aufweist, durch die ein Flügel (4, 5) geführt werden kann,
- einer Dichtung (22), die am Umfang jeder Aussparung befestigt ist, wobei die besagte Dichtung einen Höhenunterschied aufweist, **dadurch**, dass sie durch eine Übergangszone (19) zwischen der Flügel-Rumpf Anschlussvorrichtung und dem Flügel verläuft,
**dadurch gekennzeichnet, dass** es zumindest an einem Flügel (4, 5) einen Übergangskeil (20) enthält, der in der Übergangszone (19) zwischen der Anschlussvorrichtung und dem Flügel angeordnet ist, wobei die Stärke des Keils so abnimmt, dass sie vom Rand der Anschlussvorrichtung bis hin zum Flügel abnimmt, damit ein Gefälle (P) des Keils in der Lage ist, dem Flügel im Bereich der Übergangszone ein aerodynamisches Profil zu verleihen.

2. Flugzeug nach Anspruch 1, das **dadurch gekennzeichnet ist, dass** der Keil an der Unterseite (13) eines Flügels (4, 5) angebracht werden kann.

3. Flugzeug nach einem der Ansprüche 1 bis 2, das **dadurch gekennzeichnet ist, dass** der Keil an der Saugseite eines Flügels (4, 5) angebracht werden kann.

4. Flugzeug nach einem der Ansprüche 1 bis 3, das **dadurch gekennzeichnet ist, dass** der Keil aus expandiertem Kunststoffmaterial besteht.

5. Flugzeug nach einem der Ansprüche 1 bis 4, das **dadurch gekennzeichnet ist, dass** der Keil am Flügel angeklebt werden kann.

6. Flugzeug nach einem der Ansprüche 1 bis 5, das **dadurch gekennzeichnet ist, dass** der Keil mit abgerundeten Kanten versehen ist.

7. Flugzeug nach einem der Ansprüche 1 bis 6, das **dadurch gekennzeichnet ist, dass** eine Außenfläche des Keils mit einer Fugenmasse überzogen ist.

8. Flugzeug nach einem der Ansprüche 1 bis 7, das **dadurch gekennzeichnet ist, dass** eine äußere Kontur des Keils einer äußeren Kontur der Flügel-Rumpf Anschlussvorrichtung an der Stelle einer Kontaktzone (21) zwischen dem besagten Keil und der besagten Anschlussvorrichtung folgen kann.

9. Flugzeug nach einem der Ansprüche 1 bis 8, das **dadurch gekennzeichnet ist, dass** das Gefälle des Keils so ausgeführt ist, dass ein Kompressionsfaktor der Dichtung zwischen der Anschlussvorrichtung und der Innenwand der Aussparung einerseits, und zwischen dem Flügel und der Innenwand der Aussparung andererseits homogen ist.
